# EUROPEAN PATENT APPLICATION

(11) **EP 4 804 257 A1**
(43) Date of publication of application: **09.09.2026**
(21) Application number: 24887307.7
(22) Date of filing: 08.05.2024
(51) Int. Cl.: H01M 4/62, H01M 10/42, H01M 10/054, H01M 4/13

(54) **SODIUM ION BATTERY CELL, POSITIVE ELECTRODE SHEET, PREPARATION METHOD THEREFOR AND RELATED DEVICE**

(30) Priority: 08.11.2023 CN 202311480032
(71) Applicant: Contemporary Amperex Technology Co., Limited, Ningde, Fujian 352100 (CN)
(72) Inventor: WU, Kai, Ningde, Fujian 352100 (CN); TANG, Zheng, Ningde, Fujian 352100 (CN); XU, Baoyun, Ningde, Fujian 352100 (CN); YE, Yonghuang, Ningde, Fujian 352100 (CN); OUYANG, Shaocong, Ningde, Fujian 352100 (CN); JIN, Haizu, Ningde, Fujian 352100 (CN)
(74) Representative: Kraus & Lederer PartGmbB
(86) International application number: PCT/CN2024/091694
(87) International publication number: WO 2025/097683

(57) **Abstract**

A sodium ion battery cell, a positive electrode sheet, a preparation method therefor and a related device. The sodium ion battery cell comprises a positive electrode sheet, the positive electrode sheet comprising a positive electrode active material and a solid electrolyte interphase film at least bonded to the surface of the positive electrode active material, and the solid electrolyte interphase film comprising one or multiple cations from Na⁺, Li⁺, K⁺ and Ca²⁺. The solid electrolyte interphase film bonded to the surface of the positive electrode active material comprises cations such as Na⁻, Li⁺, K⁺ and Ca²⁺, and the cations can participate in electrochemical reactions of the sodium ion batteries to provide reversible capacity, so as to compensate for the capacity loss caused by the passivation of the positive electrode active material, thus improving the cycle performance of batteries. Additionally, the solid electrolyte interphase film comprising the cations helps to reduce the impedance of batteries, thus further improving the cycle performance of batteries.

## Description

This application claims priority to the Chinese Patent Application No. 202311480032.1, filed with the China National Intellectual Property Administration on November 08, 2023 and entitled "SODIUM-ION BATTERY CELL AND POSITIVE ELECTRODE SHEET, PREPARATION METHODS THEREOF, AND RELATED APPARATUSES", which is incorporated herein by reference in its entirety.

### TECHNICAL FIELD

This application relates to the field of battery technologies, and specifically, to a sodium-ion battery cell and a positive electrode sheet, preparation methods thereof, and related apparatuses.

### BACKGROUND

Batteries serve as the core of new energy vehicles and various electronic devices. With the development of science and technology, the market requirements for battery performance are becoming increasingly high. Long life is one of the basic requirements for the batteries. However, during cycling of the batteries, due to various factors, the capacities of the batteries usually decay rapidly, and the cycling performance deteriorates, thus affecting the endurance time of various electric apparatuses and resulting in poor user experience. Therefore, there is an urgent need to improve the cycling performance and extend the battery life.

### SUMMARY

Embodiments of this application are intended to provide a sodium-ion battery cell and a positive electrode sheet, preparation methods thereof, and related apparatuses, which can solve the problem of poor battery cycling performance.

### TECHNICAL SOLUTION

The technical solutions adopted by the embodiments of this application are described below.

According to a first aspect, an embodiment of this application provides a sodium-ion battery cell including a positive electrode sheet, where the positive electrode sheet includes a positive electrode active material and a solid electrolyte interphase film bonded to at least a surface of the positive electrode active material, and the solid electrolyte interphase film contains one or more cations of Na⁺, Li⁺, K⁺, and Ca²⁺.

The solid electrolyte interphase film bonded to the surface of the positive electrode active material of this application contains cations such as Na⁺, Li⁺, K⁺, and Ca²⁺. These cations can participate in the electrochemical reactions of a sodium-ion battery, provide reversible capacity, compensate for the capacity loss caused by the passivation of the positive electrode active material by the solid electrolyte interphase film, and improve the battery cycling performance. In addition, the solid electrolyte interphase film containing these cations has high ionic conductivity, helping to reduce the battery impedance, thereby further improving the battery cycling performance.

In some embodiments, the solid electrolyte interphase film contains one or more cations of Na⁺, Li⁺, and K⁺.

These cations can well participate in the electrochemical reactions, thereby compensating for the capacity loss caused by the passivation of the positive electrode active material and improving the battery cycling performance.

In some embodiments, a mass percentage of the above cations contained in the solid electrolyte interphase film in the positive electrode sheet is 0.09% to 0.7%, optionally 0.3% to 0.67%.

An appropriate amount of cations contained in the solid electrolyte interphase film help to fully exert their active effects and participate in the electrochemical reactions, thereby compensating for the capacity loss caused by the passivation of the positive electrode active material by the solid electrolyte interphase film, and improving the battery cycling performance.

According to a second aspect, an embodiment of this application provides a preparation method of a sodium-ion battery cell, including:
preparing an electrode assembly including a positive electrode sheet, where the positive electrode sheet includes a positive electrode active material and an additive, and the additive contains one or more cations of Na⁺, Li⁺, K⁺, and Ca²⁺; and
combining the electrode assembly with an electrolyte and then performing a formation treatment.

When a positive electrode sheet including specific additives is used for preparing a sodium-ion battery cell, during a formation treatment process, these additives can decompose to release one or more cations of Na⁺, Li⁺, K⁺, and Ca²⁺, and participate in the formation of a solid electrolyte interphase film on a surface of the positive electrode active material, such that the solid electrolyte interphase film on the surface of the positive electrode active material contains one or more cations of Na⁺, Li⁺, K⁺, and Ca²⁺. Cations such as Na⁺, Li⁺, K⁺, and Ca²⁺ can participate in the electrochemical reactions of a sodium-ion battery, provide reversible capacity, compensate for the capacity loss caused by the passivation of the positive electrode active material, and improve the battery cycling performance. In addition, the solid electrolyte interphase film has high ionic conductivity, helping to reduce the battery impedance, thereby further improving the battery cycling performance.

In some embodiments, the additive includes one or more of nitrite and sulfite, and cations in the nitrite and the sulfite each independently include one or more of Na⁺, Li⁺, K⁺, and Ca²⁺.

The nitrite and sulfite of Na⁺, Li⁺, K⁺, and Ca²⁺ can decompose to release corresponding cations during charging and discharging, and the cations participate in the electrochemical reactions, compensate for the capacity loss caused by the passivation of the positive electrode active material, and improve the battery cycling performance.

In some embodiments, the sulfite includes one or more of potassium sulfite, potassium metabisulfite, sodium sulfite, sodium metabisulfite, calcium sulfite, and calcium metabisulfite.

In some embodiments, the nitrite includes one or more of lithium nitrite, potassium nitrite, sodium nitrite, and calcium nitrite.

These nitrites and sulfites can decompose to release corresponding cations during charging of a battery and participate in the formation of the solid electrolyte interphase film on the surface of the positive electrode active material, thereby helping to reduce the consumption of sodium ions in the positive electrode active material; and these nitrites and sulfites also participate in the electrochemical reactions, compensate for the capacity loss caused by the passivation of the positive electrode active material, and improve the battery cycling performance.

In some embodiments, a mass percentage of the additive in an active layer included in the positive electrode sheet is 0.5% to 5%, optionally 2% to 5%.

Controlling the content of the additive within a certain range can form a certain amount of cations in the solid electrolyte interphase film on the surface of the positive electrode active material, helping to improve the battery cycling performance, preventing the content of the positive electrode active material from being excessively low, and helping to reduce the capacity loss of the positive electrode sheet.

In some embodiments, Dᵥ50 of the additive is 2 µm to 75 µm, optionally 2 µm to 45 µm.

Reasonably setting the particle size of the additive can allow the additive to have an appropriate specific surface area and shorten diffusion paths of cations and anions in the additive, helping to reduce the degree of electrode polarization during charging and discharging, thereby facilitating the decomposition and film-forming reaction of the additive during charging and discharging of the battery.

Moreover, after the additive decomposes, pores are left in the positive electrode sheet. Using an additive with an appropriate particle size helps to alleviate the increase in porosity of the positive electrode sheet caused by the decomposition of the additive during charging and discharging, thereby increasing the compacted density of the positive electrode sheet.

In some embodiments, Dᵥ50 of the positive electrode active material is 1 µm to 20 µm, optionally 4 µm to 10 µm.

An appropriate particle size of the positive electrode active material facilitates the processing of a positive electrode slurry and also facilitates the bonding with the solid electrolyte interphase film.

In some embodiments, a charging voltage range of the formation treatment step includes 3 V to 4.2 V, optionally 3 V to 4 V.

Within this voltage range, the additive in the positive electrode sheet can effectively decompose to release corresponding cations, participate in the formation of the solid electrolyte interphase film, and improve the battery cycling performance.

In some embodiments, a charging rate in the formation treatment step is 0.05C to 0.5C, optionally 0.1C to 0.3C.

Performing the formation treatment at a low rate allows the additive in the positive electrode sheet to decompose and form a film at a specified speed, helping to improve the uniformity of the solid electrolyte interphase film on the surface of the positive electrode active material.

According to a third aspect, an embodiment of this application provides a positive electrode sheet including a positive electrode active material and an additive, where the additive contains one or more cations of Na⁺, Li⁺, K⁺, and Ca²⁺.

Specific additives are added to the positive electrode sheet, so that after the positive electrode sheet is applied to a sodium-ion battery cell, these additives can decompose to release one or more cations of Na⁺, Li⁺, K⁺, and Ca²⁺ during charging and participate in the formation of a solid electrolyte interphase film on a surface of the positive electrode active material particles, such that the solid electrolyte interphase film contains one or more cations of Na⁺, Li⁺, K⁺, and Ca²⁺. Cations such as Na⁺, Li⁺, K⁺, and Ca²⁺ can participate in the electrochemical reactions of a sodium-ion battery, provide reversible capacity, compensate for the capacity loss caused by the passivation of the positive electrode active material, and improve the battery cycling performance. In addition, the solid electrolyte interphase film has high ionic conductivity, helping to reduce the battery impedance, thereby further improving the battery cycling performance.

According to a fourth aspect, an embodiment of this application provides a preparation method of a positive electrode sheet, including:
preparing a positive electrode slurry including a positive electrode active material and an additive, where the additive contains one or more cations of Na⁺, Li⁺, K⁺, and Ca²⁺; and
applying the positive electrode slurry on a positive electrode current collector, and drying and compacting to obtain a positive electrode sheet.

Additives are added to the positive electrode slurry, and these additives can decompose to release corresponding cations during charging and participate in the formation of the solid electrolyte interphase film on the surface of the positive electrode active material, helping to improve the battery cycling performance.

According to a fifth aspect, an embodiment of this application provides a battery module including the sodium-ion battery cell according to the above first aspect, or including a sodium-ion battery cell prepared using the preparation method according to the above second aspect.

According to a sixth aspect, an embodiment of this application provides a battery pack including the battery module according to the fifth aspect.

In the positive electrode sheet of the sodium-ion battery cell according to the embodiments of this application, a special solid electrolyte interphase film is bonded to the surface of the positive electrode active material, which allows for excellent cycling performance and long service life. Therefore, the battery module including the sodium-ion battery cell and the battery pack including the battery module also exhibit good cycling performance and long service life.

According to a seventh aspect, an embodiment of this application provides an electric apparatus including at least one of the sodium-ion battery cell according to the first aspect, the battery module according to the fifth aspect, and the battery pack according to the sixth aspect.

The battery (the sodium-ion battery cell, the battery module, or the battery pack) disclosed in this application can be used in electric apparatuses that use a battery as a power source or various energy storage systems that use a battery as an energy storage element, to provide electrical energy. The above battery exhibits the advantage of long service life. Therefore, applying the battery to various electric apparatuses helps to extend the endurance time of the various electric apparatuses and improve the user experience of the various electric apparatuses.

### BRIEF DESCRIPTION OF DRAWINGS

In order to more clearly illustrate the technical solutions in the embodiments of this application, the accompanying drawings required to be used in the description of the embodiments or exemplary technical descriptions will be briefly described below. Apparently, the accompanying drawings described below are only some embodiments of this application. For those of ordinary skill in the art, other accompanying drawings can also be obtained based on these accompanying drawings without creative efforts.
FIG. 1 is a schematic diagram of a battery cell according to some embodiments of this application;
FIG. 2 is an exploded view of a battery cell according to some embodiments of this application;
FIG. 3 is a schematic diagram of a battery module according to some embodiments of this application;
FIG. 4 is a schematic diagram of a battery pack according to some embodiments of this application;
FIG. 5 is an exploded view of a battery pack according to some embodiments of this application; and
FIG. 6 is a schematic diagram of an electric apparatus using a battery as a power source according to some embodiments of this application.

Reference signs in specific embodiments are as follows:
01. housing; 02. cover plate; 03. electrode assembly; 04. battery cell; 05. battery module; 06. upper box body; and 07. lower box body.

### DESCRIPTION OF EMBODIMENTS

The embodiments of the technical solutions of this application will be described in detail below with reference to the accompanying drawings. The following embodiments are only used to illustrate the technical solutions of this application more clearly, and thus are merely used as examples and cannot be used to limit the protection scope of this application.

Unless otherwise defined, all technical and scientific terms used herein have the same meaning as commonly understood by those skilled in the art to which this application belongs; the terms used herein are only for the purpose of describing specific embodiments and are not intended to limit this application; the terms "comprise", "include", "have", and any variations thereof in the specification and claims of this application and the above description of the accompanying drawings are intended to cover non-exclusive inclusion.

In the description of the embodiments of this application, the technical terms "first", "second", and the like are only used to distinguish different objects, and should not be understood as indicating or implying relative importance or implicitly indicating the number, specific order, or primary-secondary relationship of the indicated technical features. In the description of the embodiments of this application, "a plurality of" means two or more, unless otherwise defined explicitly and specifically.

Reference to "embodiment" in this specification means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by those skilled in the art that the embodiments described herein may be combined with other embodiments.

In the description of the embodiments of this application, the term "and/or" is merely an association relationship describing associated objects, indicating that three relationships may exist. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "at least one" means one or more, and "a plurality of" means two or more. The expression "at least one of the following items (or pieces)" or similar expressions refers to any combination of these items, including a single item (or piece) or any combination of a plurality of items (or pieces). For example, "at least one item (piece) of a, b, or c" or "at least one item (piece) of a, b, and c" may indicate: a, b, c, a-b (that is, a and b), a-c, b-c, or a-b-c, where a, b, c may be single or multiple.

It should be understood that in the various embodiments of this application, the size of the sequence numbers of the above processes does not mean the order of execution, and the partial or all steps can be executed in parallel or in sequence, and the execution order of each process should be determined by its function and inherent logic, and should not constitute any limitation on the implementation process of the embodiments of this application.

The masses of the related components mentioned in the specification of the embodiments of this application can not only refer to the specific contents of the components, but also indicate the mass ratio relationship between the components. Therefore, as long as the contents of the related components in the specification of the embodiments of this application are scaled up or down proportionally, the contents of the related components all fall within the scope disclosed in the specification of the embodiments of this application. Specifically, the mass described in the specification of the embodiments of this application may be mass units well known in the chemical field such as µg, mg, g, and kg.

A secondary battery, such as a sodium-ion battery, typically includes two electrodes: a positive electrode and a negative electrode. Active materials in the electrodes undergo electrochemical reactions during cycling of the battery. For example, a positive electrode active material deintercalates active metal ions during charging of the battery, and the active metal ions are then intercalated into a negative electrode active material to form a composite with the negative electrode active material. These reactions can facilitate the conversion between electrical energy and chemical energy, and affect various properties of the battery.

In a sodium-ion battery, sodium ions deintercalated from a positive electrode active material, such as a sodium-ion oxide positive electrode active material, during cycling can be reversibly intercalated and deintercalated between the positive electrode active material and a negative electrode active material, but some sodium ions also participate in the formation of a solid electrolyte interphase film on an electrode surface, so that these sodium ions can no longer be transported between a positive electrode and a negative electrode, resulting in active sodium loss. Moreover, the solid electrolyte interphase film is repeatedly dissolved and regenerated during charging and discharging of the battery, causing continuous loss of active sodium. This phenomenon causes capacity decay, thereby affecting the cycle life of the battery. In addition, the positive electrode active material undergoes phase transformation during desodiation, the phase transformation leads to poor structural stability and exposes excessive crystal planes, resulting in high initial impedance and rapid impedance growth, thus accelerating cycling decay and further greatly deteriorating the battery cycling performance.

In order to improve the cycling performance of the sodium-ion battery, the related art attempts to optimize the positive electrode active material. For example, special elements are doped into a lattice structure of the positive electrode active material to optimize the structure and composition of the positive electrode active material. However, after element doping, some sodium ions in the positive electrode active material still continuously participate in the formation of the solid electrolyte interphase film on the electrode surface, resulting in severe active sodium loss and limited improvement in the cycling performance of the sodium-ion battery. Alternatively, various additives are added to an electrolyte, but this method needs to consider the solubility and reactivity of the additives in the electrolyte. When the additives have poor solubility, or the additives are difficult to undergo the required reaction, or the additives undergo unnecessary side reactions, the battery cycling performance cannot be effectively improved.

In view of the above problems, in embodiments of this application, cations such as Na⁺, Li⁺, K⁺, and Ca²⁺ are added to a solid electrolyte interphase film on a surface of a positive electrode active material of a sodium-ion battery cell, thereby providing a certain passivation effect on the positive electrode active material, reducing the deintercalation of sodium ions from the positive electrode active material, and slowing down the loss of sodium ions in the positive electrode active material; and these cations can participate in the electrochemical reactions of a sodium-ion battery, provide reversible capacity, compensate for the capacity loss caused by the passivation of the positive electrode active material, and improve the battery cycling performance. In addition, the solid electrolyte interphase film has high ionic conductivity, helping to reduce the battery impedance and improve the battery cycling performance.

The sodium-ion battery cell with good cycling performance provided by the embodiments of this application can be assembled into a battery module or a battery pack, and can be further used for preparing various electric apparatuses.

This application is further illustrated below in conjunction with embodiments. It should be understood that these embodiments are merely used to describe this application but not to limit the scope of this application.

### [Sodium-ion battery cell]

According to a first aspect, an embodiment of this application provides a sodium-ion battery cell including a positive electrode sheet, where the positive electrode sheet includes a positive electrode active material and a solid electrolyte interphase film bonded to at least a surface of the positive electrode active material, and the solid electrolyte interphase film contains one or more cations of Na⁺, Li⁺, K⁺, and Ca²⁺.

After the sodium-ion battery cell undergoes charging and discharging, the positive electrode active material reacts with an electrolyte at a solid-liquid interface to form a passivation layer covering the surface of the positive electrode active material and having solid electrolyte characteristics, where the passivation layer is the solid electrolyte interphase film. The positive electrode sheet including the solid electrolyte interphase film bonded to at least the surface of the positive electrode active material means that part or all of the solid electrolyte interphase film included in the positive electrode sheet is bonded to the surface of the positive electrode active material. The solid electrolyte interphase film being bonded to the surface of the positive electrode active material means that the solid electrolyte interphase film is in contact with the positive electrode active material and partially or completely covers the positive electrode active material. It has been proved in the electrochemical field that positive electrode sheets of sodium-ion battery cells all have the solid electrolyte interphase film, and its distribution position is bonded to the surface of the positive electrode active material.

An ion composition in the solid electrolyte interphase film can be qualitatively analyzed using X-ray photoelectron spectroscopy (XPS). Specifically, a photoelectron spectrum (XPS spectrum) of a sample can be tested, so that information about a surface of the sample or an inner layer at a certain distance from the surface is obtained. The binding energies of photoelectrons excited from different elements have different values, and the binding energy of a given inner shell electron of a given element also relates to the chemical bonding state of the element and its chemical environment. As the molecule in which the element is located varies, a photoelectron peak of the given inner-shell electron undergoes a displacement, that is, chemical shift. Therefore, each element has its own characteristic peak in the XPS spectrum, and the presence of the element and its chemical state (including a chemical environment where the element is located and an oxidation state) are determined based on the binding energy value, chemical shift, and peak intensity of the characteristic peak.

Since the solid electrolyte interphase film is bonded to the surface of the positive electrode active material, and the element composition of the solid electrolyte interphase film is not completely the same as the element composition of the positive electrode active material, if the positive electrode sheet is etched during the XPS test process, XPS spectra corresponding to the solid electrolyte interphase film and the positive electrode active material will be obtained successively, where the element compositions of these XPS spectra are not completely the same, so it can be analyzed that a film is bonded to the surface of the positive electrode active material, and this film contains one or more cations of Na⁺, Li⁺, K⁺, and Ca²⁺.

Taking the solid electrolyte interphase film containing K⁺ (or Li⁺, Ca²⁺) as an example, the existence of the solid electrolyte interphase film in the positive electrode sheet of the sodium-ion battery cell and the inclusion of K⁺ in the solid electrolyte interphase film can be determined in the following method: A sodium-ion battery cell after electric cycling in a glove box is disassembled, a positive electrode sheet is washed and dried and then transferred to the glove box for sample preparation, and the resulting sample is transferred to an XPS vacuum chamber for testing. During the XPS test process, a surface of the sample is tested first to obtain an XPS spectrum (the first XPS spectrum) of the surface. When a solid electrolyte interphase film contains K⁺, the first XPS spectrum shows a characteristic peak of K⁺ but does not show characteristic peaks unique to a positive electrode active material (for example, for a positive electrode active material NaFe_{0.33}Mn_{0.33}Ni_{0.33}O₂, characteristic peaks corresponding to Fe, Mn, and Ni do not appear in the first XPS spectrum).

Then, under specified conditions (for example, with 2000 eV and Ta₂O₅ used as a standard sample), Ar⁺ is used for performing ion etching on a same position of the sample in a depth direction at a specified speed (for example, 0.4 nm/s), and one XPS spectrum is obtained every certain etching distance. During the test process, it can be found that after etching a certain distance, the n-th XPS spectrum different from the first XPS spectrum can be obtained, and the n-th XPS spectrum shows the characteristic peaks unique to the positive electrode active material (for example, for the positive electrode active material NaFe_{0.33}Mn_{0.33}Ni_{0.33}O₂, characteristic peaks corresponding to Fe, Mn, and Ni appear in the n-th XPS spectrum), but the characteristic peak of K⁺ does not appear.

Based on the changes in the element composition in the XPS spectra during the entire XPS test process described above, it can be determined that the sample includes at least two layers with different chemical compositions, where one layer is a positive electrode active material layer corresponding to the n-th XPS spectrum, and a film layer corresponding to the first XPS spectrum is present on the surface of the positive electrode active material, that is, a solid electrolyte interphase film. The solid electrolyte interphase film contains K⁺.

For a case where the solid electrolyte interphase film contains Na⁺, during the etching process, the first XPS spectrum shows a characteristic peak of Na⁺ but does not show the characteristic peaks unique to the positive electrode active material; while the n-th XPS spectrum shows both the characteristic peak of Na⁺ and the characteristic peaks unique to the positive electrode active material.

The solid electrolyte interphase film bonded to the surface of the positive electrode active material in the embodiments of this application contains cations such as Na⁺, Li⁺, K⁺, and Ca²⁺. These cations can participate in the electrochemical reactions of the sodium-ion battery, provide reversible capacity, compensate for the capacity loss caused by the passivation of the positive electrode active material by the solid electrolyte interphase film, and improve the battery cycling performance. In addition, the solid electrolyte interphase film containing these cations has high ionic conductivity, helping to reduce the battery impedance, thereby further improving the battery cycling performance.

In some implementations, the solid electrolyte interphase film contains one or more cations of Na⁺, Li⁺, and K⁺.

These cations can well participate in the electrochemical reactions, thereby compensating for the capacity loss caused by the passivation of the positive electrode active material and improving the battery cycling performance.

In some implementations, a mass percentage of the above cations contained in the solid electrolyte interphase film in the positive electrode sheet is 0.09% to 0.7%, optionally 0.3% to 0.67%. For example, it may be any one point value of 0.09%, 0.1%, 0.12%, 0.15%, 0.2%, 0.22%, 0.25%, 0.3%, 0.35%, 0.4%, 0.45%, 0.5%, 0.55%, 0.6%, 0.65%, 0.67%, and 0.7%, or fall within a range defined by any two of these values.

Since the solid electrolyte interphase film is small in mass and thin, and cannot be separated from the positive electrode sheet, it is inconvenient to directly measure the mass percentage of the cations in the solid electrolyte interphase film, the amount of these cations can be reflected by the mass percentage of the cations in the positive electrode sheet. The mass percentage of the cations in the positive electrode sheet can be obtained by ICP test.

Specifically, for cations such as Li⁺, K⁺, Ca²⁺ in the solid electrolyte interphase film, since active metal ions of the positive electrode active material of the sodium-ion battery cell are Na⁺ and typically do not contain cations such as Li⁺, K⁺, Ca²⁺, ICP test can be performed by disassembling the sodium-ion battery cell and dissolving the positive electrode sheet (for example, dissolving the positive electrode sheet by using aqua regia), to obtain the mass percentage of the cations such as Li⁺, K⁺, Ca²⁺ in the positive electrode sheet.

Na⁺ in the solid electrolyte interphase film can be derived from the positive electrode active material or other substances, such as certain additives. For an unknown positive electrode sheet (an unknown sample), a positive electrode active material can be identified based on XPS analysis, and a mass percentage m₁ of the positive electrode active material in the unknown sample and a total mass percentage a₁ of Na⁺ in the unknown sample can be obtained by ICP test; then, a positive electrode sheet containing only the positive electrode active material without additives (a blank control group) is prepared, and the mass percentage of the positive electrode active material therein is controlled to be the same as that of the unknown sample (both mass percentages are denoted as m₁); and after charge and discharge cycles, a total mass percentage a₂ of Na⁺ therein is tested. If a₁ is greater than a₂, it indicates that Na⁺ in the solid electrolyte interphase film is derived from not only the positive electrode active material but also other substances, that is, the solid electrolyte interphase film contains sodium ions derived from an additive, and a difference between a₁ and a₂ is a mass percentage of Na⁺ derived from the additive.

An appropriate amount of cations contained in the solid electrolyte interphase film help to fully exert their active effects and participate in the electrochemical reactions, thereby compensating for the capacity loss caused by the passivation of the positive electrode active material by the solid electrolyte interphase film, and improving the battery cycling performance.

In some implementations, the solid electrolyte interphase film contains one or more anions of NO₃⁻, NO₂⁻, SO₄²⁻, and SO₃²⁻, optionally containing NO₃⁻ and NO₂⁻. The solid electrolyte interphase film formed by combining these anions with cations has good ion conduction performance, helping to reduce the battery impedance, thereby further improving the battery cycling performance.

### [Preparation of sodium-ion battery cell]

According to a second aspect, an embodiment of this application provides a preparation method of a sodium-ion battery cell, including:
preparing an electrode assembly including a positive electrode sheet, where the positive electrode sheet includes a positive electrode active material and an additive, and the additive contains one or more cations of Na⁺, Li⁺, K⁺, and Ca²⁺; and
combining the electrode assembly with an electrolyte and then performing a formation treatment.

The electrode assembly is an important component of a battery cell and typically includes a positive electrode sheet, a separator, and a negative electrode sheet. The positive electrode sheet, the separator, and the negative electrode sheet are arranged in sequence and then laminated or wound to form the electrode assembly.

Combining the electrode assembly with the electrolyte means that a liquid-state electrolyte (a liquid electrolyte) is injected into a housing equipped with the electrode assembly, or a solid electrolyte is stacked with the positive electrode sheet, separator, and negative electrode sheet in the electrode assembly in a specified order, and then fixed by pressurization or heating. After the battery cell including the battery assembly and the electrolyte is packaged, a formation process is typically required, that is, charging the battery at a specified current. The role of formation is to activate positive and negative electrode active materials or other materials of the battery.

In this embodiment of this application, when a positive electrode sheet including specific additives is used for preparing a sodium-ion battery cell, during a formation treatment process, these additives decompose to release one or more cations of Na⁺, Li⁺, K⁺, and Ca²⁺, and participate in the formation of a solid electrolyte interphase film on a surface of the positive electrode active material, such that the solid electrolyte interphase film on the surface of the positive electrode active material contains one or more cations of Na⁺, Li⁺, K⁺, and Ca²⁺. Cations such as Na⁺, Li⁺, K⁺, and Ca²⁺ can participate in the electrochemical reactions of a sodium-ion battery, provide reversible capacity, compensate for the capacity loss caused by the passivation of the positive electrode active material by the solid electrolyte interphase film, and improve the battery cycling performance. In addition, the solid electrolyte interphase film has high ionic conductivity, helping to reduce the battery impedance, thereby further improving the battery cycling performance.

In some implementations, the additive includes one or more of nitrite and sulfite, and cations in the nitrite and the sulfite each independently include one or more of Na⁺, Li⁺, K⁺, and Ca²⁺.

The nitrite and sulfite of Na⁺, Li⁺, K⁺, and Ca²⁺ can decompose to release corresponding cations during charging, participate in the electrochemical reactions, compensate for the capacity loss caused by the passivation of the positive electrode active material, and improve the battery cycling performance.

Chemical reactions of these nitrites and sulfites decomposing to form a film during charging include the following steps:
(1) Nitrite

   First step: XNO₂ → NO₂ ↑ + X⁺ + e, or X(NO₂)₂ → NO₂ ↑ + X²⁺ + e.

   Second step: NO₂ → NO₃⁻.
(2) Sulfite

   First step: X₂SO₃ → SO₃²⁻ + 2X⁺ + e, or XSO₃ → SO₃²⁻ ↑ + X²⁺ + e.

   Second step: SO₃²⁻ → SO₄²⁻.

X⁺ and X²⁺ are the cations in the nitrite and sulfite. The nitrite and sulfite can decompose to release the corresponding cations in the reaction in the first step during charging.

In some implementations, the sulfite includes one or more of potassium sulfite, potassium metabisulfite, sodium sulfite, sodium metabisulfite, calcium sulfite, and calcium metabisulfite.

In some implementations, the nitrite includes one or more of lithium nitrite, potassium nitrite, sodium nitrite, and calcium nitrite, optionally including one or more of potassium nitrite, sodium nitrite, and calcium nitrite.

These nitrites and sulfites can decompose to release corresponding cations during charging of a battery and participate in the formation of the solid electrolyte interphase film on the surface of the positive electrode active material, thereby helping to reduce the consumption of sodium ions in the positive electrode active material; and these nitrites and sulfites can also participate in the electrochemical reactions, compensate for the capacity loss caused by the passivation of the positive electrode active material, and improve the battery cycling performance.

In some implementations, a mass percentage of the additive in an active layer included in the positive electrode sheet is 0.5% to 5%, optionally 2% to 5%. For example, it may be any one point value of 0.5%, 1%, 1.5%, 2%, 2.5%, 3%, 3.5%, 4%, 4.5%, and 5%, or fall within a range defined by any two of these values.

The mass percentage of the additive in the active layer included in the positive electrode sheet can be calculated based on raw materials for preparing the positive electrode sheet, or can be obtained by ICP test. Controlling the content of the additive within a certain range can form a certain amount of cations in the solid electrolyte interphase film on the surface of the positive electrode active material, helping to improve the battery cycling performance, preventing the content of the positive electrode active material from being excessively low, and helping to reduce the capacity loss of the positive electrode sheet.

In some implementations, Dᵥ50 of the additive is 2 µm to 75 µm, optionally 2 µm to 45 µm. For example, it may be any one point value of 2 µm, 5 µm, 10 µm, 25 µm, 30 µm, 35 µm, 40 µm, 45 µm, 50 µm, 55 µm, 60 µm, 65 µm, 70 µm, and 75 µm, or fall within a range defined by any two of these values.

A particle size distribution of materials is typically represented by a percentage of particles in different particle size ranges to a total amount. There are various standards for testing the particle size distribution, such as quantity distribution, length distribution, area distribution, volume distribution, and mass distribution. Dᵥ50 is a specific particle size distribution based on volume distribution, which refers to a particle size corresponding to 50% in the volume distribution. Dᵥ50 can be tested using a laser method.

Reasonably setting the particle size of the additive can allow the additive to have an appropriate specific surface area and shorten diffusion paths of cations and anions in the additive, helping to reduce the degree of electrode polarization during charging and discharging, thereby facilitating the decomposition and film-forming reaction of the additive during charging and discharging of the battery.

Moreover, after the additive decomposes, pores are left in the positive electrode sheet. In this embodiment of this application, using an additive with an appropriate particle size helps to alleviate the increase in porosity of the positive electrode sheet caused by the decomposition of the additive during charging and discharging, thereby increasing the compacted density of the positive electrode sheet.

In some implementations, Dᵥ50 of the positive electrode active material is 1 µm to 20 µm, optionally 4 µm to 10 µm. For example, it may be any one point value of 1 µm, 2 µm, 4 µm, 6 µm, 8 µm, 10 µm, 12 µm, 14 µm, 16 µm, 18 µm, and 20 µm, or fall within a range defined by any two of these values.

An appropriate particle size of the positive electrode active material facilitates the processing of a positive electrode slurry and also facilitates the bonding with the solid electrolyte interphase film.

It can be understood that in the positive electrode sheet, the positive electrode active material and the additive may exist in a form of physical mixing.

In some implementations, a charging voltage range of the formation treatment step includes 3 V to 4.2 V, optionally 3 V to 4 V. For example, it may be a value within a range defined by any two of 3 V, 3.2 V, 3.4 V, 3.6 V, 3.8 V, 4 V, and 4.2 V.

The formation treatment is to charge the battery at a specified current, where a voltage gradually increases during charging. That is, the formation treatment is performed in a specified charging voltage range. The charging voltage range can be directly set on a device used for the formation treatment (for example, a formation cabinet).

Within this charging voltage range, the additive in the positive electrode sheet can effectively decompose to release corresponding cations, participate in the formation of the solid electrolyte interphase film, and improve the battery cycling performance.

It can be understood that in the charging voltage range of 3 V to 4.2 V, a charging cut-off voltage may be set to be close to 4.2 V. For example, the cut-off voltage may be 3.8 V to 4.2 V.

In some implementations, a charging rate in the formation treatment step is 0.05C to 0.5C, optionally 0.1C to 0.3C. For example, it may be any one point value of 0.05 C, 0.1 C, 0.15 C, and 0.2 C, or fall within a range defined by any two of these values.

The formation treatment includes a step of charging the sodium-ion battery cell, and a charging speed can be measured by the charging rate, where the charging rate is a current intensity required for the battery to be charged to its rated capacity in a specified time. The charging rate can be directly set on the device used for the formation treatment (for example, the formation cabinet). Performing the formation treatment at a low rate allows the additive in the positive electrode sheet to decompose and form a film at a specified speed, helping to improve the uniformity of the solid electrolyte interphase film formed on the surface of the positive electrode active material.

### [Positive electrode sheet]

According to a third aspect, an embodiment of this application provides a positive electrode sheet including a positive electrode active material and an additive, where the additive contains one or more cations of Na⁺, Li⁺, K⁺, and Ca²⁺.

Specific additives are added to the positive electrode sheet, so that after the positive electrode sheet is applied to a sodium-ion battery cell, these additives can decompose to release one or more cations of Na⁺, Li⁺, K⁺, and Ca²⁺ during charging, and participate in the formation of a solid electrolyte interphase film on a surface of the positive electrode active material, such that the solid electrolyte interphase film contains one or more cations of Na⁺, Li⁺, K⁺, and Ca²⁺. Cations such as Na⁺, Li⁺, K⁺, and Ca²⁺ can participate in the electrochemical reactions of a sodium-ion battery, provide reversible capacity, compensate for the capacity loss caused by the passivation of the positive electrode active material, and improve the battery cycling performance. In addition, the solid electrolyte interphase film has high ionic conductivity, helping to reduce the battery impedance, thereby further improving the battery cycling performance.

For the specific type selection, particle size, and mass percentage of the additive in the positive electrode sheet, reference may be made to the content in the preparation method of a sodium-ion battery cell according to the above second aspect.

In some implementations, the positive electrode active material, that is, a sodium-ion positive electrode active material, may include one or more of a layered oxide, a polyanionic compound, and a Prussian blue compound. For example, the layered oxide may include NaₓMO₂, where M is one or more of Fe, Mn, Ni, Co, Cr, Sc, Ti, V, Cr, Cu, and Zn, and 0.4 ≤ x ≤ 1. For example, NaₓMO₂ is NaFe_{0.33}Mn_{0.33}Ni_{0.33}O₂, NaFe_{0.5}Ni_{0.5}O₂, Na_{0.6}MnO₂, Na_{0.44}MnO₂, Na_{0.65}Mn_{0.75}Ni_{0.25}O₂, NaNi_{0.5}Mn_{0.5}O₂, Na_{0.78}Ni_{0.23}Mn_{0.69}O₂, NaVO₂, NaFeO₂, or Na_{0.7}CoO₂. The polyanionic compound may include one or more of phosphates, pyrophosphates, sulfate types, and anion-doped types, for example, one or more of olivine-type NaFePO₄, Na₂FeP₂O₇, NaFePO₄F, Na₃V₂(PO₄)₃, and NaFeSO₄. The Prussian blue compound may include one or more of Na_{0.61}Fe[Fe(CN)₆]_{0.94}, BR-FeHCF, Na_{1.48}Ni[Fe(CN)₆]_{0.89}, and NaNi_{0.05}Mn_{0.95}[Fe(CN)₆].

A mass percentage of the positive electrode active material in an active layer of the positive electrode sheet is 90% to 95%. For example, it may be any one point value of 90%, 91%, 92%, 93%, 94%, and 95%, or fall within a range defined by any two of these values. It can be understood that setting the mass percentage of the positive electrode active material in the active layer of the positive electrode sheet at a higher level can increase the energy density of the sodium-ion battery.

In some implementations, the positive electrode sheet further includes a conductive agent. The conductive agent is used to collect microcurrent of the positive electrode active material and microcurrent between the positive electrode active material and a current collector, thereby improving the electronic conductivity. In addition, the conductive agent can also facilitate the infiltration of an electrolyte at the positive electrode sheet.

The conductive agent may include one or more of acetylene black (SP), carbon nanotubes, conductive carbon black (super-P), Ketjen black, carbon fiber, and graphene.

A mass percentage of the conductive agent in the active layer of the positive electrode sheet is 1% to 5%. For example, it may be any one point value of 1%, 1.5%, 2%, 2.5%, 3%, 3.5%, 4%, 4.5%, and 5%, or fall within a range defined by any two of these values. The mass percentage of the conductive agent may alternatively be set to another value as needed.

In some implementations, the positive electrode sheet further includes a binder. The binder can improve the binding strength between substances in the active layer of the positive electrode sheet and the binding strength between the active layer of the positive electrode sheet and the positive electrode current collector.

The binder may include one or more of polyvinylidene fluoride, polyvinylidene fluoride-hexafluoropropylene copolymer, polyoxyethylene, polyimide, polytetrafluoroethylene, polybutyl acrylate, polyacrylonitrile, carboxymethyl cellulose, carboxymethyl cellulose salt, polyacrylic acid, polyacrylate, polyvinyl alcohol, sodium alginate, cyclodextrin, butadiene styrene rubber, vinyl acetate resin, acrylic resin, and chlorinated rubber.

A mass percentage of the binder in the active layer of the positive electrode sheet is 1% to 5%. For example, it may be any one point value of 1%, 1.5%, 2%, 2.5%, 3%, 3.5%, 4%, 4.5%, and 5%, or fall within a range defined by any two of these values. The mass percentage of the binder may alternatively be set to another value as needed.

In some implementations, the positive electrode sheet further includes a dispersant. An exemplary dispersant includes carboxymethyl cellulose (CMC). A mass percentage of the dispersant in the active layer of the positive electrode sheet may be set to 0.5% to 5%, optionally 1% to 5%, including but not limited to any one point value of 0.5%, 1%, 1.5%, 2%, 2.5%, 3%, 3.5%, 4%, 4.5%, and 5%, or falling within a range defined by any two of these values.

In some implementations, the positive electrode sheet further includes a positive electrode current collector. The positive electrode current collector is used to transmit electrons. The active layer of the positive electrode sheet including components such as the positive electrode active material, the additive, the conductive agent, and the binder is provided on at least one side of the positive electrode current collector, optionally on both sides of the current collector.

The positive electrode current collector may include but is not limited to a metal current collector, a carbon current collector, a conductive resin current collector, and a composite current collector of metal and resin, more specifically such as aluminum, copper, nickel, titanium, iron and their respective alloys, stainless steel, carbon fiber, carbon nanotubes (CNT), and graphite. Optionally, the positive electrode current collector includes aluminum.

A thickness of the positive electrode current collector may be 3 µm to 20 µm, optionally 10 µm to 15 µm. For example, it may be any one point value of 3 µm, 5 µm, 10 µm, 15 µm, and 20 µm, or fall within a range defined by any two of these values.

In some implementations, a porosity of the positive electrode sheet is 40% to 60%, optionally 50% to 60%. For example, it may be any one point value of 40%, 45%, 50%, 55%, and 60%, or fall within a range defined by any two of these values. The porosity of the positive electrode sheet can be calculated using an apparent volume and true volume of the positive electrode sheet, that is, the porosity is equal to (V₀ - V) / V × 100%, where V₀ is the apparent volume of the positive electrode sheet, and V is the true volume of the positive electrode sheet. The positive electrode sheet according to this embodiment of this application has a high porosity and can provide channels for the entry and exit of sodium ions and cations in the solid electrolyte interphase film, thereby improving the ion conduction efficiency.

In some implementations, a compacted density of the positive electrode sheet is 2 g/cm³ to 4 g/cm³, optionally 3 g/cm³ to 3.5 g/cm³. For example, it may be any one point value of 2 g/cm³, 2.2 g/cm³, 2.4 g/cm³, 2.6 g/cm³, 2.8 g/cm³, 3 g/cm³, 3.2 g/cm³, 3.4 g/cm³, 3.6 g/cm³, 3.8 g/cm³, and 4 g/cm³, or fall within a range defined by any two of these values. The compacted density of the positive electrode sheet can be tested using a compacted density meter, with reference to relevant standards such as GB/T 24533-2019. A high compacted density helps to increase the capacity of the positive electrode sheet.

### [Preparation of positive electrode sheet]

According to a fourth aspect, an embodiment of this application provides a preparation method of a positive electrode sheet, including:
preparing a positive electrode slurry including a positive electrode active material and an additive, where the additive contains one or more cations of Na⁺, Li⁺, K⁺, and Ca²⁺; and
applying the positive electrode slurry on a positive electrode current collector, and drying and compacting to obtain a positive electrode sheet.

For the specific type selection, particle size, and mass percentage of the above additive in the positive electrode sheet, reference may be made to the content in the preparation method of a sodium-ion battery cell according to the above second aspect.

Additives are added to the positive electrode slurry, and these additives can decompose to release corresponding cations during charging and participate in the formation of the solid electrolyte interphase film on the surface of the positive electrode active material, helping to improve the battery cycling performance.

It can be understood that the sodium-ion battery cell according to the above first aspect of the embodiments of this application includes not only the positive electrode sheet but also a negative electrode sheet, an electrolyte, a separator, an outer package, and other components. For more detailed technical features of these components, reference may be made to the following content.

### 1. Negative electrode sheet

The sodium-ion battery cell further includes a negative electrode sheet, and the negative electrode sheet is typically isolated from the positive electrode sheet. The negative electrode sheet includes a negative electrode current collector and further optionally includes a negative electrode active layer provided on at least one side of the negative electrode current collector. The negative electrode active layer includes a negative electrode active material, a conductive agent, a binder, and the like.

The negative electrode current collector may include but is not limited to metal or a composite current collector. For example, as the metal, sodium, sodium alloy, copper, copper alloy, nickel, nickel alloy, titanium, titanium alloy, silver, silver alloy, or the like can be used.

The composite current collector may include a composite material of a polymer material and metal, where the polymer material may include but is not limited to polypropylene (PP), polyethylene terephthalate (PET), polybutylene terephthalate (PBT), polystyrene (PS), polyethylene (PE), and the like. The metal may include but is not limited to sodium, copper, copper alloy, nickel, nickel alloy, titanium, titanium alloy, silver, and silver alloy.

A thickness of the negative electrode current collector may be 3 µm to 15 µm. For example, it may be any one point value of 3 µm, 5 µm, 8 µm, 10 µm, and 15 µm, or fall within a range defined by any two of these values.

For a case where the negative electrode sheet includes the negative electrode active layer, the negative electrode active material in the negative electrode active layer may include but is not limited to any one of a carbon-based material, an alloy material, a titanium-based material, and sodium metal, or a mixture or composite formed by several of these materials. The carbon-based material includes but is not limited to one or more of graphite, soft carbon, hard carbon, carbon microspheres, and carbon fiber. The alloy material includes but is not limited to one or more of sodium-tin alloy, sodium-germanium alloy, and sodium-antimony alloy. The titanium-based material includes but is not limited to one or more of titanium dioxide, titanate, and titanium phosphate.

A mass percentage of the negative electrode active material in the negative electrode active layer may be set to 85% to 98%, optionally 95% to 98%. For example, it is any one point value of 85%, 90%, 91%, 92%, 93%, 94%, 95%, 96%, 97%, and 98%, or falls within a range defined by any two of these values.

The conductive agent includes one or more of acetylene black (SP), carbon nanotubes, conductive carbon black (super-P), Ketjen black, carbon fiber, and graphene. The binder includes but is not limited to one or more of polyvinylidene fluoride, polyvinylidene fluoride-hexafluoropropylene copolymer, polyoxyethylene, polyimide, polytetrafluoroethylene, polybutyl acrylate, polyacrylonitrile, carboxymethyl cellulose, carboxymethyl cellulose salt, polyacrylic acid, polyacrylate salt, polyvinyl alcohol, sodium alginate, cyclodextrin, butadiene styrene rubber, vinyl acetate resin, acrylic resin, and chlorinated rubber. The negative electrode active layer further optionally includes a thickener, such as carboxymethyl cellulose (CMC).

A mass percentage of each of the conductive agent, the binder, and the thickener in the negative electrode active layer may be set to 0.5% to 5%. For example, it is any one point value of 0.5%, 1%, 1.5%, 2%, 2.5%, 3%, 3.5%, 4%, 4.5%, and 5%, or falls within a range defined by any two of these values.

### 2. Electrolyte

The sodium-ion battery cell further includes an electrolyte. For example, the electrolyte may be a liquid electrolyte including an electrolytic sodium salt and a solvent.

The electrolytic sodium salt may include one or more of sodium hexafluorophosphate (NaPF₆), sodium bis(fluorosulfonyl)imide (NaFSI), sodium trifluoromethanesulfonate (NaOTf), sodium fluoride (NaF), sodium nitrate (NaNO₃), sodium difluoro(oxalato)borate (NaDFOB), sodium tetrafluoroborate (NaBF₄), and sodium perchlorate (NaClO₄).

A concentration of the electrolytic sodium salt in the liquid electrolyte may be set to 0.1 mol/L to 1.5 mol/L, optionally 0.8 mol/L to 1.2 mol/L. For example, it may be any one point value of 0.1 mol/L, 0.2 mol/L, 0.6 mol/L, 0.8 mol/L, 1 mol/L, 1.2 mol/L, and 1.5 mol/L, or fall within a range defined by any two of these values.

The solvent includes one or more of ethylene carbonate (EC), ethyl methyl carbonate (EMC), dimethyl ether (DME), diethylene glycol dimethyl ether, diethylene glycol diethyl ether, tetraethylene glycol dimethyl ether, 2,2,2,2-tetrafluoroethyl ether, ethylene glycol diethyl ether, triethylene glycol dimethyl ether, methyl trifluoroethyl carbonate (FEMC), dioxolane (DOL), acetonitrile (AN), fluorobenzene, triethyl phosphate (TEP), sulfolane, 2-methyltetrahydrofuran, tetrahydrofuran, dimethyl sulfoxide, and N,N-dimethylacetamide.

### 3. Separator

The sodium-ion battery cell further includes a separator, where the separator is disposed between the positive electrode sheet and the negative electrode sheet, and can separate the positive and negative electrodes. The separator can prevent electrons in a battery from passing through freely and prevent short circuit due to contact between electrodes, but can allow ions in the electrolyte to pass through freely between the positive electrode sheet and the negative electrode sheet.

The separator may use a porous separator with electrochemical stability and mechanical stability, for example, one or more single-layer or multi-layer films of glass fiber, non-woven fabric, polyethylene (PE), polypropylene (PP), and polyvinylidene fluoride (PVDF).

### 4. Outer package

The sodium-ion battery cell may include an outer package. The outer package can be used to package the electrode assembly including the positive electrode sheet, negative electrode sheet, and separator, and the electrolyte.

The outer package of the sodium-ion battery cell may be a hard shell, such as a hard plastic shell, an aluminum shell, and a steel shell, and may alternatively be a soft package, such as a pouch-type soft package. The material of the soft package may be plastic, such as polypropylene, polybutylene terephthalate, and polybutylene succinate.

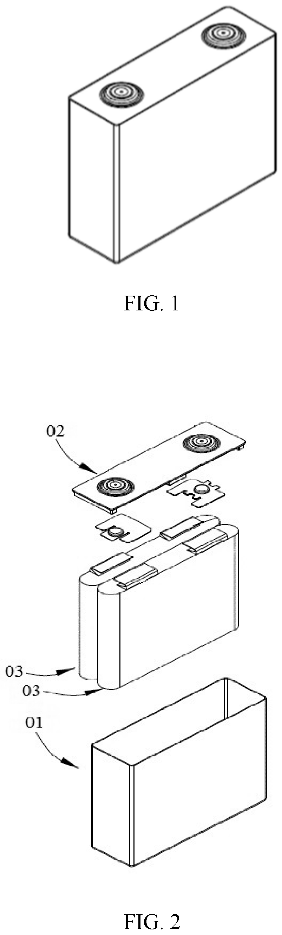

The outer package of the sodium-ion battery cell may be cylindrical, prismatic, or of any other shape. For example, FIG. 1 is a sodium-ion battery cell with a prismatic outer package as an example.

Referring to FIG. 2, the outer package may include a housing 01 and a cover plate 02. The housing 01 may include a bottom plate and side plates connected to the bottom plate, where the bottom plate and the side plates enclose to form an accommodating cavity. The housing 01 has an opening in communication with the accommodating cavity, and the cover plate 02 can cover the opening to close the accommodating cavity. The positive electrode sheet, the negative electrode sheet, and the separator can form an electrode assembly 03 through a winding process or a lamination process. One or more electrode assemblies 03 are packaged in the accommodating cavity. The electrolyte infiltrates into the electrode assembly 03.

### [Battery module and battery pack]

According to a fifth aspect, an embodiment of this application provides a related apparatus which is a battery module, including the sodium-ion battery cell according to the above first aspect, or including a sodium-ion battery cell prepared using the preparation method according to the above second aspect.

According to a sixth aspect, an embodiment of this application provides a related apparatus which is a battery pack, including the battery module according to the above fifth aspect.

A battery module is formed by integrating one or more battery cells, and the battery module can provide higher voltage and capacity, with outputs of specific functions. One or more battery modules are installed in a battery box, and a battery management system and the like are typically added to form a battery pack. The battery pack is typically a product provided to users.

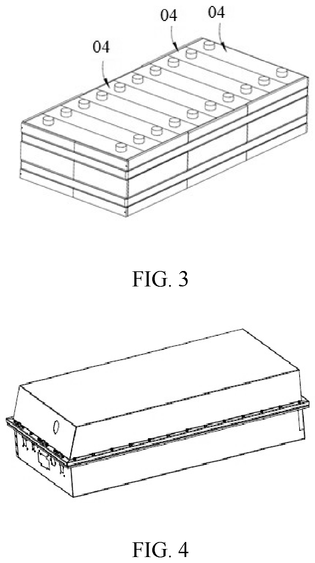

Referring to FIG. 3, a battery module as an example is shown, where in the battery module, a plurality of battery cells 04 may be arranged in sequence along a length direction of the battery module. Certainly, the battery cells 04 may alternatively be arranged in any other manner. Furthermore, the plurality of battery cells 04 may be fixed by fasteners.

Optionally, the battery module may further include an enclosure with an accommodating space, and the plurality of battery cells 04 are accommodated in the accommodating space.

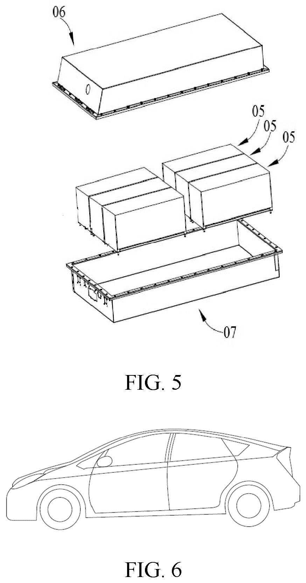

Referring to FIGs. 4 and 5, a battery pack as an example is shown. The battery pack may include a battery box and a plurality of battery modules 05 arranged in the battery box. The battery box includes an upper box body 06 and a lower box body 07, where the upper box body 06 can cover the lower box body 07 to form an enclosed space for accommodating the battery modules 05. The plurality of battery modules 05 may be arranged in the battery box in any manner.

In the positive electrode sheet of the sodium-ion battery cell according to this embodiment of this application, a special solid electrolyte interphase film is bonded to the surface of the positive electrode active material, which allows for excellent cycling performance and long service life. Therefore, the battery module including the sodium-ion battery cell and the battery pack including the battery module also exhibit good cycling performance and long service life.

### [Electric apparatus]

An embodiment of this application further provides another related apparatus which is an electric apparatus. The electric apparatus includes at least one of the sodium-ion battery cell according to the above first aspect, the battery module according to the fifth aspect, and the battery pack according to the sixth aspect.

The battery (the sodium-ion battery cell, the battery module, or the battery pack) disclosed in this application can be used in electric apparatuses that use a battery as a power source or various energy storage systems that use a battery as an energy storage element, to provide electrical energy. The above battery exhibits the advantage of long service life. Therefore, applying the battery to various electric apparatuses helps to extend the endurance time of the various electric apparatuses and improve the user experience of the various electric apparatuses.

The electric apparatus may include but is not limited to a mobile phone, a tablet, a laptop computer, an electric toy, an electric tool, an electric bicycle, an electric vehicle, a ship, a spacecraft, and the like. The electric toy may include a fixed or mobile electric toy, for example, a game console, an electric toy car, an electric toy ship, and an electric toy aircraft, and the like. The spacecraft may include an airplane, a rocket, a space shuttle, a spaceship, and the like. As the electric apparatus, a battery cell, battery module, or battery pack in a battery can be selected based on the requirements for using the electric apparatus.

FIG. 6 is an electric apparatus as an example. The electric apparatus is a pure electric vehicle, a hybrid electric vehicle, or a plug-in hybrid electric vehicle, and the like. In order to meet the demand of the electric apparatus for high power and high energy density of the battery, a battery pack or a battery module can be used.

Examples of this application are described in detail below. The examples are illustrative and intended to explain this application, but should not be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### [Examples 1 to 6, Comparative Example 1, and Comparative Example 2]

### Example 1

This example provided a sodium-ion battery cell, and a preparation method of the sodium-ion battery cell included the following steps.

### (1) Preparation of positive electrode sheet

An aluminum foil with a thickness of 12 µm was used as a positive electrode current collector.

A positive electrode active material NaFe_{0.33}Mn_{0.33}Ni_{0.33}O₂ with Dᵥ50 of 6 µm, an additive sodium nitrite with Dᵥ50 of 45 µm, a conductive agent carbon black, and a binder polyvinylidene fluoride (PVDF) were fully stirred and mixed in an appropriate amount of a solvent N-methylpyrrolidone (NMP) at a mass ratio of 93:2:3:2 to form a uniform positive electrode slurry. Then, the positive electrode slurry was uniformly applied on a surface of the positive electrode current collector aluminum foil, followed by drying and cold pressing, to obtain a positive electrode sheet with a compacted density of 3.1 g/cm³, a porosity of 45%, and a mass percentage of sodium nitrite in a positive electrode active layer of 2%.

### (2) Negative electrode sheet

A copper foil with a thickness of 8 µm was used as a negative electrode sheet.

### (3) Separator

A porous polyethylene (PE) film was used as a separator.

### (4) Preparation of electrolyte

In an environment with a water content of less than 10 ppm, ethylene carbonate EC and diethyl carbonate DMC as non-aqueous organic solvents were mixed at a volume ratio of 1:1 to obtain a mixed solvent, and then sodium hexafluorophosphate and the mixed solvent were mixed to prepare an electrolyte with a sodium hexafluorophosphate concentration of 1 mol/L.

### (5) Preparation of sodium-ion battery cell

The above positive electrode sheet, separator, and negative electrode sheet were stacked in sequence, so that the separator was located between the positive electrode sheet and the negative electrode sheet to provide separation role. Then, the resulting stack formed an electrode assembly through a lamination process. The electrode assembly was placed in an outer packaging shell, dried, and then injected with an electrolyte. Then, processes such as vacuum packaging, standing, formation, and shaping, were performed to obtain a sodium-ion battery cell.

The formation process included: placing the sodium-ion battery cell in a formation cabinet for charging, and performing charging at 25°C at a rate of 0.33C from 3.1 V to a cut-off voltage of 3.8 V to 4.2 V, to complete the formation of the sodium-ion battery cell.

### Example 2

This example provided a sodium-ion battery cell, which differed from Example 1 only in that the additive sodium nitrite was replaced with an equal mass of potassium nitrite.

### Example 3

This example provided a sodium-ion battery cell, which differed from Example 1 only in that the additive sodium nitrite was replaced with an equal mass of calcium nitrite.

### Example 4

This example provided a sodium-ion battery cell, which differed from Example 1 only in that the additive sodium nitrite was replaced with an equal mass of lithium nitrite.

### Example 5

This example provided a sodium-ion battery cell, which differed from Example 1 only in that the additive sodium nitrite was replaced with an equal mass of sodium sulfite.

### Example 6

This example provided a sodium-ion battery cell, which differed from Example 1 only in that the additive sodium nitrite was replaced with an equal mass of potassium sulfite.

### Comparative Example 1

This comparative example provided a sodium-ion battery cell, which differed from Example 1 in that the positive electrode sheet included no additive, and the mass percentage of NaFe_{0.33}Mn_{0.33}Ni_{0.33}O₂ in the positive electrode active layer was adaptively increased to 95%.

### Comparative Example 2

This comparative example provided a sodium-ion battery cell, which differed from Example 1 in that the positive electrode sheet included no additive, the mass percentage of NaFe_{0.33}Mn_{0.33}Ni_{0.33} in the positive electrode active layer was adaptively increased to 95%, and the electrolyte contained a saturated amount of sodium nitrite (sodium nitrite had low solubility in the electrolyte, so the saturated concentration of sodium nitrite in the electrolyte was extremely low).

After formation, according to the working mechanism of the sodium-ion battery cell, it could be determined that in the sodium-ion battery cells of the examples and comparative examples, a solid electrolyte interphase film was formed on the surface of the positive electrode active material of the positive electrode sheet. The sodium-ion battery cell was disassembled, and the disassembled positive electrode sheet was analyzed by XPS and ICP. It was found that the chemical composition and/or mass percentages of related ions in the solid electrolyte interphase film of Examples 1 to 6 were different from that in Comparative Example 1, where the solid electrolyte film in each of Example 1 and Example 5 contained a higher mass percentage of Na⁺ than that in Comparative Example 1, and the solid electrolyte interphase film in each of Examples 2 to 4 and Example 6 showed cations such as K⁺, Ca²⁺, and Li⁺ that were not present in Comparative Example 1. The chemical compositions of the solid electrolyte interphase films and the mass percentages of related cations in the solid electrolyte interphase films in the positive electrode sheets in the examples were shown in Table 1 below.

In combination with the preparation method of the sodium-ion battery cell, it can be inferred that since the Na⁺ sources of the solid electrolyte films in Example 1 and Example 5 are only the positive electrode active material and the additive, the increased Na⁺ in the solid electrolyte interphase films in Example 1 and Example 5 compared to Comparative Example 1 should be derived from the added additives sodium nitrite and sodium sulfite, respectively. In addition, the sources of the cations such as K⁺, Ca², and Li⁺ in the solid electrolyte interphase films in Examples 2 to 4 and Example 6 are only the additive, so the newly added cations in the solid electrolyte interphase film in Examples 2 to 4 and Example 6 compared to Comparative Example 1 should be derived from the added additives potassium nitrite, calcium nitrite, lithium nitrite, and potassium sulfite in sequence. It can be seen that adding nitrites and sulfites of cations such as Na⁺, K⁺, Ca²⁺, and Li⁺ to the positive electrode sheet allows cations corresponding to the additives to be included in the solid electrolyte interphase film on the surface of the positive electrode active material of the positive electrode sheet. In addition, the solid electrolyte interphase film is typically formed on the surface of the positive electrode active material after the active ions in the positive electrode sheet participate in the electrochemical reactions, so it can be inferred that the cations such as Na⁺, K⁺, Ca²⁺, and Li⁺ in the additive also participate in the electrochemical reactions of the sodium-ion battery cell.

In addition, the performance test was performed on each sodium-ion battery cell, with the test results shown in Table 1.

**Table 1**

| | Additive in positive electrode sheet | Solid electrolyte interphase film | | DCR (Ω) | Cell capacity increase ratio | Capacity retention rate (after 1000 cycles) |
|---|---|---|---|---|---|---|
| | | Chemical composition corresponding to additive | Mass percentage of X^{a+} of solid electrolyte interphase film in positive electrode sheet | | | |
| Example 1 | Sodium nitrite | Na⁺, NO₃⁻, NO₂⁻ | 0.3% | 0.5 | 104% | 90% |
| Example 2 | Potassium nitrite | K⁺, NO₃⁻, NO₂⁻ | 0.3% | 0.6 | 103% | 88% |
| Example 3 | Calcium nitrite | Ca²⁺, NO₃⁻, | 0.3% | 0.7 | 102% | 83% |
| Example 4 | Lithium nitrite | Li⁺, NO₃⁻, NO₂⁻ | 0.3% | 0.6 | 102% | 90% |
| Example 5 | Sodium sulfite | Na⁺, SO₄²⁻, SO₃²⁻ | 0.3% | 0.8 | 102% | 91% |
| Example 6 | Potassium sulfite | K⁺, SO₄²⁻, SO₃²⁻ | 0.3% | 0.9 | 103% | 86% |
| Comparative Example 1 | / | / | / | 2.9 | 100% | 75% |
| Comparative Example 2 | (Sodium nitrite added to electrolyte) | / | / | 2.9 | 100% | 75% |

| | | | | | | |
|---|---|---|---|---|---|---|
| Notes: (1) In the table, X^{a+} represents the cations corresponding to the additive in the solid electrolyte interphase film, and a is 1 or 2. For example, X represents Na⁺ in Example 1, and X represents K⁺ in Example 2. (2) In Example 1 and Example 6, the mass percentage of Na⁺ of the solid electrolyte interphase film in the positive electrode sheet refers to the mass percentage (c₀) of Na⁺ corresponding to the additive in the positive electrode sheet, that is, the mass percentage of Na⁺ derived from the decomposition of the additive in the positive electrode sheet, and does not include the mass percentage of Na⁺ derived from the positive electrode active material NaFe_{0.33}Mn_{0.33}Ni_{0.33}O₂ in the positive electrode sheet. (3) "Cell capacity" refers to an initial discharge capacity of the sodium-ion battery cell. "Cell capacity increase ratio" refers to a percentage of a ratio of the cell capacity to that of Comparative Example 1. For example, the cell capacity increase ratio of Example 1 is equal to the cell capacity of Example 1 / the cell capacity of Comparative Example 1 * 100%. The cell capacity increase ratio of Example 2 is equal to cell capacity of Example 2 / the cell capacity of Comparative Example 1 * 100%. | | | | | | |

The test results show that compared to Comparative Example 1, the sodium-ion battery cells of Examples 1 to 6 have lower DCR (DCR is decreased by 69% to 83%), the cell capacity is increased, the capacity retention rate after 1000 cycles is higher and reaches 83% or more, and the battery life is extended. In combination with the chemical composition of the solid electrolyte interphase film in each of Examples 1 to 6, it can be seen that the increased Na⁺ in the solid electrolyte interphase film or the cations such as Li⁺, K⁺, and Ca²⁺ contained in the solid electrolyte interphase film can participate in the electrochemical reactions of the sodium-ion battery, provide reversible capacity, compensate for the capacity loss caused by the passivation of the positive electrode active material by the solid electrolyte interphase film, and improve the battery cycling performance. In addition, the solid electrolyte interphase film containing these cations helps to reduce the battery impedance, thereby further improving the battery cycling performance.

In addition, it is found through tests that there is no significant difference in the chemical composition and mass percentages of related ions in the solid electrolyte interphase film between Comparative Example 1 and Comparative Example 2. In addition, Comparative Example 2 shows that adding the additive sodium nitrite to the electrolyte has no effect on the performance of the sodium-ion battery. This may be because the additive sodium nitrite in Comparative Example 2 has low solubility in the organic electrolyte and has an extremely low content, and the additive sodium nitrite cannot decompose in the electrolyte to release corresponding cations, and thus cannot participate in film formation on the surface of the positive electrode active material, that is, it cannot increase the Na⁺ content in the solid electrolyte interphase film, and ultimately cannot compensate for the capacity loss caused by the passivation of the positive electrode active material.

### [Examples 7 to 10]

### Example 7

This example provided a sodium-ion battery cell, which differed from Example 1 only in that in the preparation step of the positive electrode sheet, the mass percentage of sodium nitrite in the positive electrode active layer was 0.5%, and the mass percentage of the positive electrode active material NaFe_{0.33}Mn_{0.33}Ni_{0.33}O₂ in the positive electrode active layer was adaptively adjusted to 94.5%.

### Example 8

This example provided a sodium-ion battery cell, which differed from Example 1 only in that in the preparation step of the positive electrode sheet, the mass percentage of sodium nitrite in the positive electrode active layer was 1%, and the mass percentage of NaFe_{0.33}Mn_{0.33}Ni_{0.33}O₂ in the positive electrode active layer was adaptively adjusted to 94%.

### Example 9

This example provided a sodium-ion battery cell, which differed from Example 1 only in that in the preparation step of the positive electrode sheet, the mass percentage of sodium nitrite in the positive electrode active layer was 3%, and the mass percentage of NaFe_{0.33}Mn_{0.33}Ni_{0.33}O₂ in the positive electrode active layer was adaptively adjusted to 92%.

### Example 10

This example provided a sodium-ion battery cell, which differed from Example 1 only in that in the preparation step of the positive electrode sheet, the mass percentage of sodium nitrite in the positive electrode active layer was 5%, and the mass percentage of NaFe_{0.33}Mn_{0.33}Ni_{0.33}O₂ in the positive electrode active layer was adaptively adjusted to 90%.

In Examples 7 to 10, the mass percentage of cations corresponding to the additive in the solid electrolyte interphase film formed on the surface of the positive electrode active material in the positive electrode sheet, and the performance test results of the sodium-ion battery cell were shown in Table 2 below.

**Table 2**

| | Mass percentage of sodium nitrite in positive electrode active layer | Mass percentage of X^{a+} of solid electrolyte interphase film in positive electrode sheet | DCR (Ω) | Cell capacity increase ratio | Capacity retention rate (after 1000 cycles) |
|---|---|---|---|---|---|
| Example 7 | 0.5% | 0.09% | 1.2 | 101% | 81% |
| Example 8 | 1% | 0.16% | 1 | 102.5% | 84% |
| Example 1 | 2% | 0.3% | 0.5 | 104% | 90% |
| Example 9 | 3% | 0.36% | 0.7 | 105% | 91% |
| Example 10 | 5% | 0.67% | 1.1 | 106% | 92% |
| Comparative Example 1 | / | / | 2.9 | 100% | 75% |

Table 2 reflects that as the mass percentage of sodium nitrite in the positive electrode sheet increases during the preparation process, the mass percentage of Na⁺ in the solid electrolyte interphase film in the positive electrode sheet also increases, which further reflects that Na⁺ in sodium nitrite participates in the formation of the solid electrolyte interphase film. Under the conditions of Example 1 and Examples 7 to 10, the sodium-ion batteries all have lower DCR, higher cell capacity, and higher capacity retention rate compared to Comparative Example 1, and as the mass percentage of Na⁺ in the solid electrolyte interphase film in the positive electrode sheet increases, the cell capacity also increases, which also indicates that Na⁺ in sodium nitrite can participate in the electrochemical reactions of the sodium-ion battery and provide reversible capacity.

### [Examples 11 to 14]

### Example 11

This example provided a sodium-ion battery cell, which differed from Example 1 only in that in the preparation step of the positive electrode sheet, Dᵥ50 of the sodium nitrite used was 2 µm.

### Example 12

This example provided a sodium-ion battery cell, which differed from Example 1 only in that in the preparation step of the positive electrode sheet, Dᵥ50 of the sodium nitrite used was 10 µm.

### Example 13

This example provided a sodium-ion battery cell, which differed from Example 1 only in that in the preparation step of the positive electrode sheet, Dᵥ50 of the sodium nitrite used was 30 µm.

### Example 14

This example provided a sodium-ion battery cell, which differed from Example 1 only in that in the preparation step of the positive electrode sheet, Dᵥ50 of the sodium nitrite used was 75 µm.

In Examples 11 to 14, the porosity of the positive electrode sheet before and after formation and the performance test results of the sodium-ion battery cell were shown in Table 3 below.

**Table 3**

| | Dᵥ50 of sodium nitrite (µm) | Porosity of positive electrode sheet | | DCR (Ω) | Capacity retention rate (after 1000 cycles) |
|---|---|---|---|---|---|
| | | Before formation | After formation | | |
| Example 11 | 2 | 47% | 54% | 0.4 | 94% |
| Example 12 | 10 | 49% | 56% | 0.7 | 92% |
| Example 13 | 30 | 53% | 59% | 1.1 | 89% |
| Example 1 | 45 | 45% | 60% | 0.5 | 90% |
| Example 14 | 75 | 55% | 59% | 1.2 | 88% |
| Comparative Example 1 | / | / | / | 2.9 | 75% |

Table 3 reflects that after formation, the porosity of the positive electrode sheet is increased, and a larger particle size of sodium nitrite leads to a higher porosity of the positive electrode sheet after formation, which indirectly reflects that sodium nitrite in the positive electrode sheet decomposes during formation, thereby allowing for more pores in the positive electrode sheet. In addition, Dᵥ50 of the sodium nitrite added in a range of 2 to 75 µm can effectively reduce the DCR of the sodium-ion battery and increase the capacity retention rate of the sodium-ion battery.

### [Test method]

Test methods for items in Examples and Comparative Examples in Tables 1 to 3 were as follows:

### 1. Qualitative and quantitative analysis of solid electrolyte interphase film

(1) After the cells were disassembled in a glove box, the positive electrode sheets were respectively taken out, cleaned with DMC, dried, and then cut into circular electrode sheet samples with a size of 1540.25 mm² in a vacuum glove box, and subjected to XPS test for qualitative analysis.

Specifically, during the XPS test process, a surface of each sample was first tested to obtain an XPS spectrum of the surface (the first XPS spectrum). The first XPS spectrum of the circular electrode sheet corresponding to each example showed characteristic peaks of X^{a+} (one or more of Na⁺, K⁺, Li⁺, and Ca²⁺), but did not show characteristic peaks corresponding to Fe, Mn, and Ni in the positive electrode active material NaFe_{0.33}Mn_{0.33}Ni_{0.33}O₂.

Then, under a condition with 2000 eV, Ar⁺ was used for performing ion etching on a same position of the sample in a depth direction at an etching speed of 0.4 nm/s, and a Ta₂O₅ target was used as a standard sample. One XPS spectrum was obtained every certain etching distance. During the test process, it was found that after etching a certain distance, the n-th XPS spectrum different from the first XPS spectrum could be obtained, and the n-th XPS spectrum showed characteristic peaks corresponding to Fe, Mn, and Ni in the positive electrode active material NaFe_{0.33}Mn_{0.33}Ni_{0.33}O₂. The characteristic peak of Na⁺ could appear, but characteristic peaks of K⁺, Li⁺, and Ca²⁺ could not appear.

Based on the changes in the elemental composition in the XPS spectra during the entire XPS test process described above, it could be determined that the sample included at least two layers with different chemical compositions, where one layer was a positive electrode active material layer corresponding to the n-th XPS spectrum, and a film layer corresponding to the first XPS spectrum was present on the surface of the positive electrode active material, that is, a solid electrolyte interphase film. The solid electrolyte interphase film contained one or more cations of Na⁺, K⁺, Li⁺, and Ca²⁺.

(2) In addition, the dried positive circular electrode sheet was taken, and active layer powder of the circular electrode sheet was all scraped off, weighed, and then dissolved with aqua regia, and subjected to ICP test for quantitative analysis.

For a case where the cations contained in the additive in the example were K⁺, Li⁺, or Ca²⁺, the mass percentage of K⁺, Li⁺, or Ca²⁺ in the positive electrode sheet could be obtained by ICP test.

For a case where the cations contained in the additive in the example were Na⁺, a total mass percentage c₁ in the positive electrode sheet could be obtained by ICP test, and a total mass percentage c₂ of Na⁺ in the positive electrode sheet in the blank control group (that is, Comparative Example 1 with no additive) was tested. Then, a mass percentage c₀ of Na⁺ derived from the additive in the solid electrolyte interphase film in the positive electrode sheet was equal to c₁ - c₂.

### 2. DCR

At 25°C, the sodium-ion battery cell was charged at a constant current of 0.33C to a voltage of 4.2 V, left standing for 5 min, discharged at 1C to 1.5 V, and then left standing for 15 min. Then, the sodium-ion battery cell was charged at a constant current of 0.33C to a voltage of 4.2 V and then discharged at 0.33C to 50% SOC. Then, after the sodium-ion battery cell was left standing for 30 min, a voltage V₁ was recorded. Pulse discharge was performed at 4C (I) for 30s, and a voltage V₂ after pulse discharge was recorded.

The DCR was calculated according to the formula: DCR = (voltage V₁ at the end of standing - voltage V₂ after pulse discharge) / pulse current I.

### 3. Cell capacity increase ratio and cycling performance (capacity retention rate)

At 25°C, the sodium-ion battery cell was charged at a constant current of 0.33C to a voltage of 4.2 V, then charged at a constant voltage of 4.2 V to a current of 1C, then left standing for 5 min, discharged at a constant current of 0.33C to a voltage of 1.5 V, and then left standing for 5 min. This was one charge and discharge cycle. A discharge capacity of this cycle was recorded as a discharge capacity (an initial discharge capacity) of the first cycle of the sodium-ion battery cell. An initial discharge capacity of Comparative Example 1 was set as A, and an initial discharge capacity of each example was set as B, so that a cell capacity increase ratio of each example was equal to (B/A) * 100%.

The sodium-ion battery cell was continuously subjected to 1000 cycles according to the above method, and a discharge capacity after 1000 cycles was recorded to obtain a corresponding capacity retention rate. Capacity retention rate = discharge capacity after 1000 cycles / initial discharge capacity * 100%.

### 4. Porosity of positive electrode sheet

20 circular double-sided electrode sheets with a diameter of 14 mm were cut from the positive electrode sheet, and a total weight and total thickness of the 20 circular double-sided electrode sheets were recorded to calculate a bulk density. The 20 circular double-sided electrode sheets were placed in a sample cup of a true density porosity tester, and helium displacement was used, combined with Archimedes' principle and Boyle's law, to obtain a true volume of the 20 circular double-sided electrode sheets, and then a true density was calculated. Porosity = (1 - bulk density / true density) * 100%.

### 5. Dᵥ50

An appropriate amount of sample under test was taken, 20 mL of deionized water was added for dispersion, and then the sample was tested using a Malvern 3000 (MasterSizer 3000) laser particle size analyzer with reference to the standard GB/T19077-2016/ISO 13320:2009.

In conclusion, it should be noted that the foregoing embodiments are for description of the technical solutions of this application only rather than for limiting this application. Although this application has been described in detail with reference to the foregoing embodiments, those of ordinary skill in the art should appreciate that they can still make modifications to the technical solutions described in the embodiments or make equivalent replacements to some or all technical features thereof. These modifications or replacements do not make the essence of the corresponding technical solutions depart from the scope of the technical solutions of the embodiments of this application, and all shall fall within the scope of claims and specification of this application. In particular, as long as there is no structural conflict, the technical features mentioned in the embodiments can be combined in any manner. This application is not limited to the specific embodiments disclosed in this specification, but includes all technical solutions falling within the scope of the claims.

## Claims

1. A sodium-ion battery cell, **characterized by** comprising a positive electrode sheet, wherein the positive electrode sheet comprises a positive electrode active material and a solid electrolyte interphase film bonded to at least a surface of the positive electrode active material, and the solid electrolyte interphase film contains one or more cations of Na⁺, Li⁺, K⁺, and Ca²⁺.

2. The sodium-ion battery cell according to claim 1, **characterized in that** the solid electrolyte interphase film contains one or more cations of Na⁺, Li⁺, and K⁺.

3. The sodium-ion battery cell according to claim 1 or 2, **characterized in that** a mass percentage of the cations in the positive electrode sheet is 0.09% to 0.7%, optionally 0.3% to 0.67%.

4. A preparation method of a sodium-ion battery cell, **characterized by** comprising:
preparing an electrode assembly comprising a positive electrode sheet, wherein the positive electrode sheet comprises a positive electrode active material and an additive, and the additive contains one or more cations of Na⁺, Li⁺, K⁺, and Ca²⁺; and
combining the electrode assembly with an electrolyte and then performing a formation treatment.

5. The preparation method of a sodium-ion battery cell according to claim 4, **characterized in that** the additive comprises one or more of nitrite and sulfite, and cations in the nitrite and the sulfite each independently comprise one or more of Na⁺, Li⁺, K⁺, and Ca²⁺.

6. The preparation method of a sodium-ion battery cell according to claim 5, **characterized in that** the sulfite comprises one or more of potassium sulfite, potassium metabisulfite, sodium sulfite, sodium metabisulfite, calcium sulfite, and calcium metabisulfite.

7. The preparation method of a sodium-ion battery cell according to claim 5 or 6, **characterized in that** the nitrite comprises one or more of lithium nitrite, potassium nitrite, sodium nitrite, and calcium nitrite.

8. The preparation method of a sodium-ion battery cell according to any one of claims 4 to 7, **characterized in that** a mass percentage of the additive in an active layer comprised in the positive electrode sheet is 0.5% to 5%, optionally 2% to 5%.

9. The preparation method of a sodium-ion battery cell according to any one of claims 4 to 8, **characterized in that** Dᵥ50 of the additive is 2 µm to 75 µm, optionally 2 µm to 45 µm.

10. The preparation method of a sodium-ion battery cell according to any one of claims 4 to 9, **characterized in that** Dᵥ50 of the positive electrode active material is 1 µm to 20 µm, optionally 4 µm to 10 µm.

11. The preparation method of a sodium-ion battery cell according to any one of claims 4 to 10, **characterized in that** a charging voltage range of the formation treatment step comprises 3 V to 4.2 V, optionally 3 V to 4 V.

12. The preparation method of a sodium-ion battery cell according to any one of claims 4 to 11, **characterized in that** a charging rate in the formation treatment step is 0.05C to 0.5C, optionally 0.1C to 0.3C.

13. A sodium-ion battery positive electrode sheet, **characterized by** comprising a positive electrode active material and an additive, wherein the additive contains one or more cations of Na⁺, Li⁺, K⁺, and Ca²⁺.

14. A preparation method of a sodium-ion battery positive electrode sheet, **characterized by** comprising:
preparing a positive electrode slurry comprising a positive electrode active material and an additive, wherein the additive contains one or more cations of Na⁺, Li⁺, K⁺, and Ca²⁺; and
applying the positive electrode slurry on a positive electrode current collector, and drying and compacting to obtain a positive electrode sheet.

15. A battery module, **characterized by** comprising the sodium-ion battery cell according to any one of claims 1 to 3, or comprising a sodium-ion battery cell prepared using the preparation method according to any one of claims 4 to 12.

16. A battery pack, **characterized by** comprising the battery module according to claim 15.

17. An electric apparatus, **characterized by** comprising at least one of the sodium-ion battery cell according to any one of claims 1 to 3, the battery module according to claim 15, and the battery pack according to claim 16.
